# EUROPÄISCHE PATENTANMELDUNG

(11) **EP 2 279 963 A1**
(43) Veröffentlichungstag der Anmeldung: **02.02.2011**
(21) Anmeldenummer: 09405130.7
(22) Anmeldetag: 30.07.2009
(51) Int. Cl.: B65D 71/72

(54) **Transport- und Lagertray zur Aufnahme von einem oder mehreren Gegenständen**

(71) Anmelder: I-Pac Trays, 88319 Aitrach (DE)
(72) Erfinder:
(74) Vertreter: EGLI-EUROPEAN PATENT ATTORNEYS

(57) **Zusammenfassung**

Die Erfindung betrifft ein umweltfreundliches, stapelbares und materialsparendes Transport- und Lager- tray für einen oder mehrere Gegenstände, insbesondere für Kunststoff- und Glasbehältnisse, das im wesentlichen aus Karton, Wellpappe oder Kunststoffwellpappe besteht. Arretierungsflächen (3,4) für die Gegenstände entstehen durch eine spezielle wellenförmige Faltung des Zuschnittes aus der Bodenfläche (1,5,9) des Trays heraus. Zur Stabilisierung des ganzen Trays werden die Seitenwände (10,11), Längswände (12,13) sowie die entstandenen Mittelstege mittels Verbindungslaschen (14,21) miteinander verbunden.

## Beschreibung

Die Erfindung betrifft ein Transport- und Lagertray aus Karton, Wellpappe oder Kunststoffwellpappe mit Produktarretierung zur Aufnahme von einem oder mehreren Gegenständen (insbesondere Kunststoff- oder Glasbehältnisse), dass aus einem flachen Zuschnitt durch eine spezielle Faltung und Verklebung in die Gebrauchsform bringbar ist.

Aus dem Stand der Technik sind in der Verpackungsindustrie eine Reihe von Transport- und Lagertrays dieser Art bekannt, bei welchen aber der Nachteil besteht, dass immer nur unter hohem Materialaufwand die Arretierung für die Gegenstände hergestellt werden kann. So werden durch an den äusseren Seitenwänden angehängte Zusatzflächen, welche Arretierausstanzungen beinhalten und von aussen nach innen bis zu Traymitte hereingefaltet werden, eine zweite Ebene in dem Tray erzeugt, welche dann die Gegenstände aufnimmt und arretiert.

Aufgabe der Erfindung ist es, ein Transport- und Lagertray der eingangs genannten Art so auszubilden, dass es den erwähnten Nachteil nicht aufweist.

Das eingangs genannte erfindungsgemässe Transport- und Lagertray ist **dadurch gekennzeichnet, dass** die Arretierungen für die Gegenstände durch die Ausstanzungen und die spezielle wellenförmige Faltung des Zuschnittes aus der Bodenfläche des Transport- und Lagertray heraus entsteht. Somit entfallen die materialaufwändigen an den äusseren Seitenwänden angehängten Zusatzflächen.

Erfindungsgemäss besteht das Transport- und Lagertray aus Karton oder Wellpappe und ist **dadurch gekennzeichnet, dass** die Arretierungsflächen 3 und 7 zuerst aus dem Boden heraus angehoben werden, sich dadurch das ganze Tray in seiner Längsrichtung zusammenzieht und die Stützfläche 2, 4 und 6, 8 in eine schräge Lage gebracht werden, womit eine zweite Ebene und eine dreidimensionale Stabilität in der Bodenfläche entsteht. Die Seitenwände 10-11 werden nach oben gefaltet und in einer leicht konischen Stellung gehalten. Gemäss einer vorteilhaften Ausbildungsform des Trays werden die Seitenwände 12-13 in den Ecken mit den Verbindungslaschen 14-17, sowie die Seitenwände 12-13 an der Längsseite mit den Bodenflächen 3 und 7 mittels den Verbindungslaschen 18-21, verbunden. Die Bodenflächen 1, 5, 9 werden vorzugsweise durch das Zusammenschieben der Bodenflächen 1, 5, 9 beim Aufrichten des Trays an den dadurch übereinanderliegenden Stellen verbunden, womit das ganze Tray zusätzlich in Form gehalten und eine hohe Stabilität gewährleistet. Durch die leicht konische Stellung der Seitenwände 10-11 besteht die Möglichkeit, dass mehrere Trays übereinander gestapelt werden können, wobei die eingesetzten Gegenstände (Produkte) selber mittragend sind und die aufgerichteten Seitenwände 10-11 mit ihren Laschen 14-17 eine seitliche Verschiebung verhindern.

Das Aufrichten des Trays kann manuell, aber vorzugsweise maschinell auf einem eigens dafür entwickelten Aufrichtautomaten vorgenommen werden. Das Tray kann in seiner Ausführung mit einer oder mehreren Arretierungsflächen welche aus der Bodenfläche entstehen ausgebildet sein. Die Ausstanzungen zum Arretieren der Gegenstände können mehreckig sein, bevorzugt ist eine runde Ausführungsform. Die Form des Trays kann ebenfalls mehreckig sein, bevorzugt ist eine rechteckige Form. Die Verbindungslaschen können verklebt, gesteckt oder geheftet sein.

Die Erfindung besteht in ihrer Vorzugsvariante aus vollständig recycelbarem oder leicht verrottendem natürlichem Fasermaterial wie Karton und Wellpappe und unter Anwendung lösungsmittelfreier, umweltverträglicher Klebstoffe und Druckfarben und stellt somit eine echte Bereicherung des Standes der Technik dar, zumal diese Verpackung wesentlich materialsparender und günstiger ist als die üblichen Transport- und Lagertrays ihrer Art.

Ein bevorzugtes Ausführungsbeispiel des erfindungsgemässen Transport- und Lagertrays wird nachfolgend anhand der Zeichnungen näher beschrieben, dabei zeigen:
- Fig. 1: den offenen Stanzzuschnitt des Transport- und Lagertray; und
- Fig. 2: das Transport- und Lagertray der Fig. 1 mit teil- weise aufgerichtetem Mittelteil und Seitenwände 10-11 wobei die spezielle wellenförmige Faltung sichtbar wird; und
- Fig. 3: das aufgerichtete Transport- und Lagertray in einer bevorzugten Gebrauchsform.

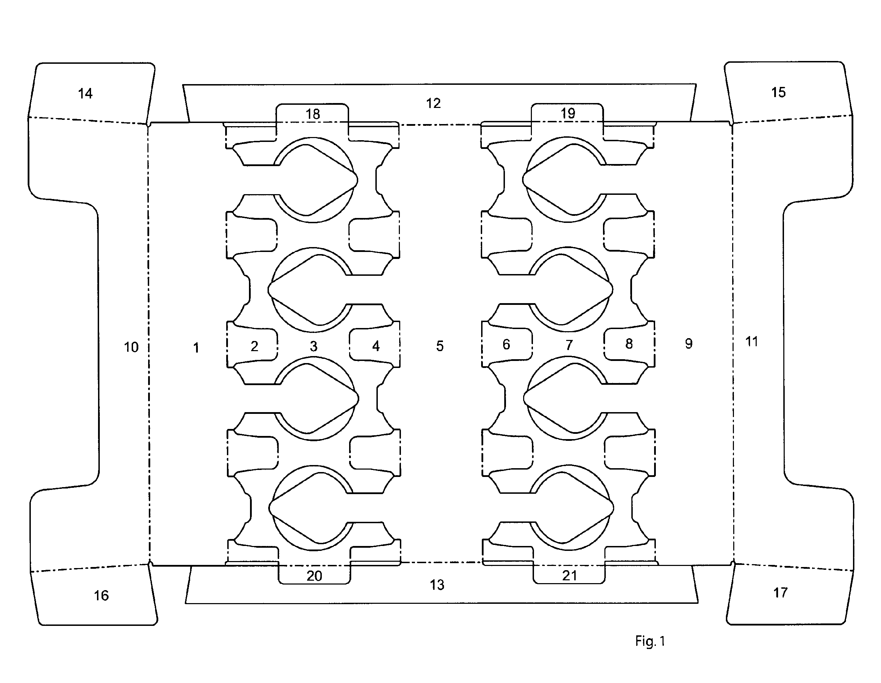

Die Fig. 1-3 zeigen ein Transport- und Lagertray bestehend aus drei Bodenflächen 1, 5 und 9 mit dazwischen befindlichen Stabilisierungs- und Stützflächen 2, 4 und 6, 8 und Arretierungsflächen 3 und 7, sowie die anhängenden Seitenflächen 10-11 mit den Verbindungslaschen 14-17 die mit den Seitenflächen 10-11 verbunden werden.
Fig. 1 zeigt den offenen Stanzzuschnitt zur Herstellung des Transport- und Lagertrays, mit den für die Arretierung notwendigen Ausstanzungen.

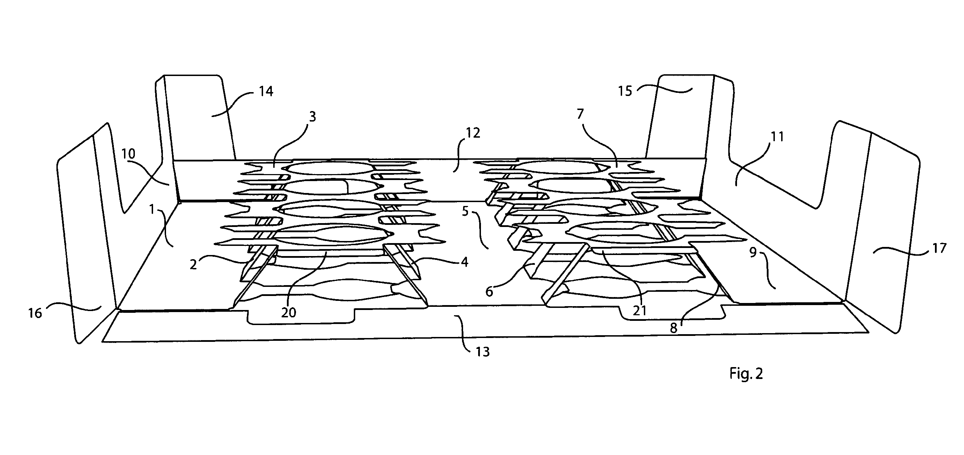

Fig. 2 zeigt das Transport- und Lagertray der Fig. 1 in einer teilweise aufgerichteten Form bei welcher die Arretierungsflächen 3 und 7 angehoben wurden und durch die Stützflächen 2, 4 und 6, 8 stabilisiert werden und den aufgestellten Seitenwänden 10-11.

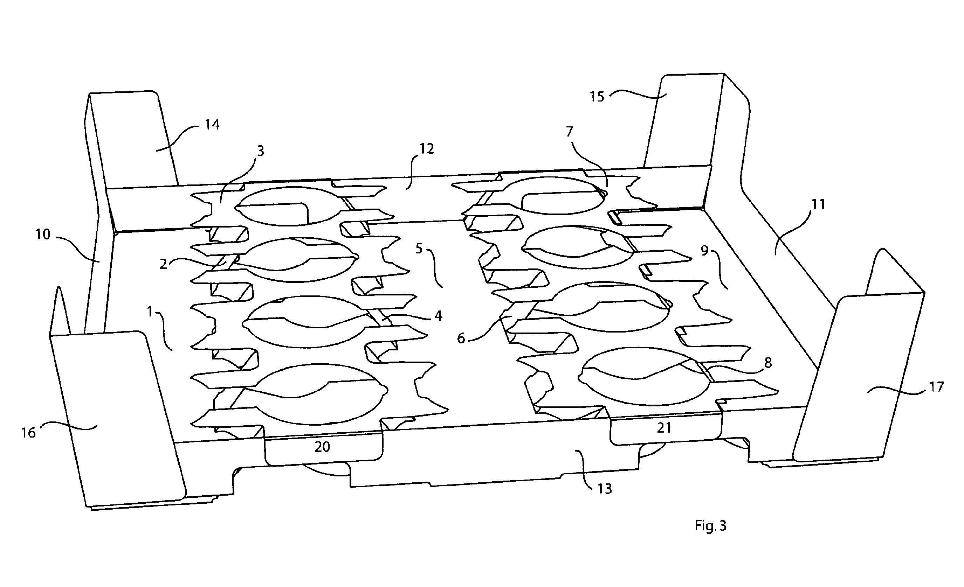

Fig. 3 zeigt das Transport- und Lagertray der Fig. 1 + 2 in seiner aufgerichteten Gebrauchsform mit den durch die Verbindungslaschen 14-17 fest verbundenen Seitenwänden 10-11.

## Patentansprüche

1. Transport- und Lagertray mit Produktarretierung zur Aufnahme von einem oder mehrerer Gegenstände, **dadurch gekennzeichnet, dass** eine oder mehrere Arretierungsflächen durch Stanzung und wellenförmige Faltung des Zuschnittes aus der Bodenfläche heraustreten und das die Seitenwände in den Tray-Eckbereichen von jeweils einer Traylängsseite und einer Trayquerseite miteinander verbunden sind.

2. Transport- und Lagertray nach Anspruch 1, **dadurch gekennzeichnet, dass** dieses Tray aus vollständig recycelbarem oder leicht verrottendem natürlichem Fasermaterial wie Karton und Wellpappe oder aus Kunststoffwellpappe besteht.

3. Transport- und Lagertray nach Anspruch 1 oder 2, **dadurch gekennzeichnet, dass** die Ausstanzungen zum Arretieren der Gegenstände mehreckig sein können, bevorzugt aber eine runde Ausführungsform ist.

4. Transport- und Lagertray nach einem der vorstehenden Ansprüche, **dadurch gekennzeichnet, dass** die Seitenwände konisch angeordnet sind.

5. Transport- und Lagertray nach einem der vorstehenden Ansprüche, **dadurch gekennzeichnet, dass** dieses Tray stapelfähig ist.

6. Transport- und Lagertray nach einem der vorstehenden Ansprüche, **dadurch gekennzeichnet, dass** eine oder mehrere Arretierungsflächen mit den Längsseitenwänden verbunden sind.

7. Transport- und Lagertray nach einem der vorstehenden Ansprüche, **dadurch gekennzeichnet, dass** die Gegenstände auf den am Boden durch die Ausstanzungen entstehenden Flächen aufliegen.

8. Transport- und Lagertray nach einem der vorstehenden Ansprüche, **dadurch gekennzeichnet, dass** die durch die Ausstanzungen entstehenden Flächen am Boden verbunden sind.

9. Aufrichtverfahren zum maschinellen Aufrichten des Transport- und Lagertray nach einem der vorstehenden Ansprüche, **dadurch gekennzeichnet, dass** durch eine Aufrichtmaschine die Arretierungsflächen aus dem Boden herausgehoben werden, die Seitenwände aufgerichtet werden und mindestens in den Tray-Eckbereichen mit jeweils einer Traylängsseite und einer Trayquerseite, sowie mit den Arretierungsflächen in der Mitte verbunden werden.

10. Aufrichtmaschine nach Anspruch 9, **dadurch gekennzeichnet, dass** sie mindestens eine Abstapel-, Aufrichte-, Verbindungs- und Übergabestation beinhaltet.
